# EUROPEAN PATENT SPECIFICATION

(11) **EP 1 925 976 B1**
(45) Date of publication and mention of the grant of the patent: **28.03.2012**
(21) Application number: 07254197.2
(22) Date of filing: 23.10.2007
(51) Int. Cl.: G03B 7/26

(54) **Image recording apparatus varying clock frequency dependent upon the power supply**
Bildaufzeichnungsvorrichtung mit variabler Taktfrequenz je nach Stromversorgung
Appareil d'enregistrement d'images avec de fréquence d'horloge variable en fonction de l'alimentation

(30) Priority: 25.10.2006 JP 2006290221
(43) Date of publication of application: 28.05.2008
(73) Proprietor: Ricoh Company, Ltd., Tokyo 143-8555 (JP)
(72) Inventor: Ohsuga, Jun, c/o Ricoh Company, Ltd., Tokyo 143-8555 (JP)
(74) Representative: Leeming, John Gerard

(56) References cited:
- JP-A- 4 134 508
- JP-A- 2001 084 054
- US-A- 5 389 998
- US-A- 5 872 433
- US-A1- 2003 043 291
- US-A1- 2004 135 540

## Description

The present invention relates to an image recording apparatus capable of varying a frequency of a clock signal according to power supply lines.

In power supplies used for an image recording apparatus, the power delivery performance or the discharge duration differs according to types of the power supplies. For example, when comparing an AA alkaline battery (hereinafter simply referred to as an "alkaline battery") with an AA lithium battery (hereinafter simply referred to as a lithium battery), the alkaline battery or the like has the low power delivery performance, while the lithium battery has the high power delivery performance. A battery life of the battery, in which the power delivery performance is high, will not be influenced largely even when a large power consumption or a high load is applied thereto. However, when the large power consumption or the high load is applied to the battery in which the power delivery performance is low, a battery voltage is lowered, and hence, a battery life thereof is shortened in the extreme.

On the other hand, an operation speed of each means or device which operates based on a clock signal becomes faster as a frequency of the clock signal becomes higher, although the power consumption also becomes larger. Whereas, when the frequency of the clock signal is low, the operation speed of each of the means or the devices becomes slow, and the power consumption becomes small. The power supply line and the clock signal thus have a close relationship with each other in light of the power consumption. Therefore, it is desirable that electronic apparatuses operate fast and have a long battery life.

In view of the foregoing, for example, Japanese patent application publication No. 2001-084054A proposes an electronic apparatus, which operates by switching low power consumption operation and high speed operation in accordance with types of power supplies connected.

However, an expensive and complex structure and function, in which a circuit size is large, are required when the types of the power supplies or the batteries are to be distinguished.

At least one objective of the present invention is to provide an image recording apparatus capable of balancing the high speed operation and the long battery life even when the kinds of the batteries are unknown.

To achieve these and other advantages and in accordance with the purpose of the invention, as embodied and broadly described herein, the invention provides an image recording apparatus as defined in the independent claim.

Advantageously, the at least one clock generating means varies the frequency of the clock signal of the at least one clock generating means for each means to which the clock signal is supplied, according to the power supply lines distinguished by the power supply line distinguishing means.

Advantageously, the at least one clock generating means includes the plural clock generating means.

Advantageously, the controlling means sets the frequency of the clock signal to be lower than a predetermined value, when a power delivery performance of the power supply connected to one of the power supply lines is determined by the power supply line distinguishing means to be lower than a predetermined performance.

Advantageously, the controlling means sets the frequency of the clock signal to be higher than a predetermined value, when a power delivery performance of the power supply connected to one of the power supply lines is determined by the power supply line distinguishing means to be higher than a predetermined performance.

Advantageously, the controlling means varies the frequency of the clock signal on the basis of at least one of an operating state and a load amount.

Advantageously, the controlling means varies the frequency of the clock signal on the basis of an amount of information to be processed.

Advantageously, the controlling means performs an error process when one of the power supply lines to be selected cannot be distinguished by the power supply line distinguishing means.

Advantageously, the variation of the frequency of the clock signal according to the power supply lines is released based on setting by a user through the controlling means.

Advantageously, the frequency of the clock signal is variable based on setting by a user through the controlling means.

It is to be understood that both the foregoing general description and the following detailed description are exemplary, and are intended to provide further explanation of the invention as claimed.

In the following, the present invention is explained in greater detail by means of several exemplary preferred embodiments thereof in conjunction with the accompanying drawings. Note that the accompanying drawings are included to provide a further understanding of the invention, and are incorporated in and constitute a part of this description. The drawings illustrate embodiments of the invention and, together with the description, serve to explain the principles of the invention.

FIG. 1 is a block diagram illustrating an image recording apparatus according to an embodiment of the present invention.

FIG. 2 is a flowchart illustrating a method for distinguishing power supply lines used in the image recording apparatus illustrated in FIG. 1.

FIG. 3 illustrates an alternative embodiment of imaging means used in the image recording apparatus illustrated in FIG. 1.

FIG. 4 illustrates an alternative embodiment of image processing means used in the image recording apparatus illustrated in FIG. 1.

FIG. 5 illustrates an alternative embodiment of controlling means used in the image recording apparatus illustrated in FIG. 1.

FIG. 6 is a circuit diagram including a power supply line distinguishing circuit used in the image recording apparatus illustrated in FIG. 1.

FIG. 7 illustrates an alternative embodiment of the power supply line distinguishing circuit used in the image recording apparatus illustrated in FIG. 1.

Reference will now be made in detail to the present preferred embodiments of the invention, examples of which are illustrated in the accompanying drawings. Wherever possible, the same reference numbers are used in the drawings and the description to refer to the same or like parts. The scope of the present invention, however, is not limited to these embodiments. Within the scope of the present invention, any structure and material described below can be appropriately modified.

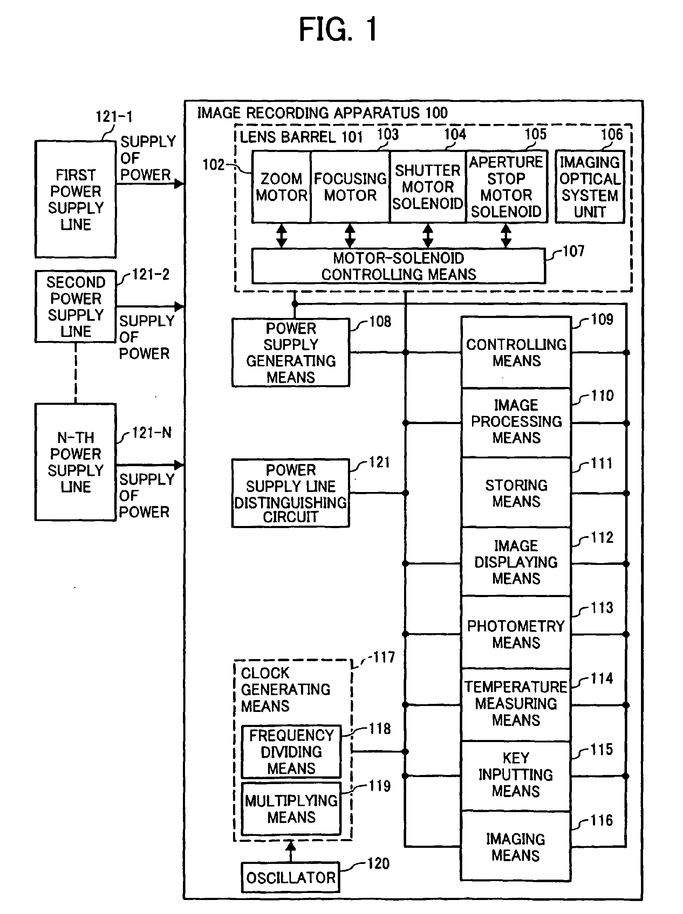

FIG. 1 is a block diagram illustrating an image recording apparatus 100 according to an embodiment of the present invention. As illustrated in FIG. 1, the image recording apparatus 100, for example, includes imaging means 116, image processing means 110, image storing means 111, image displaying means 112, controlling means 109, power supply generating means 108, photometry means 113, temperature measuring means 114, key inputting means 115, a lens barrel 101, clock generating means 117, an oscillator 120, and a power supply line distinguishing circuit 121.

The imaging means 116 may include a CCD (Charge-Coupled Device), a TG (Timing Generator), a CDS (Correlated Double Sampling) section, and an ADC (Analog-Digital Converter), and so forth. The image processing means 110 may include a DSP (Digital Signal Processor). The image storing means 111 stores images and can be a memory. The image displaying means 112 may be a LCD (Liquid Crystal Display) provided with a backlight, a EL (Electro Luminescence) display, or the like. The controlling means 109 may include a CPU (Central Processing Unit). The power supply generating means 108 may include a DC (Direct Current)/DC converter. The lens barrel 101 may include motor-solenoid controlling means 107, various motors 102 and 103, various solenoids 104 and 105, an imaging optical system 106, and so forth. The clock generating means 117 includes frequency dividing means 118 and multiplying means 119.

The image recording apparatus 100 is structured to receive supply of power from one of a first power supply line denoted as 121-1, a second power supply line denoted as 121-2, ... and an N-th power supply line denoted as 121-N.

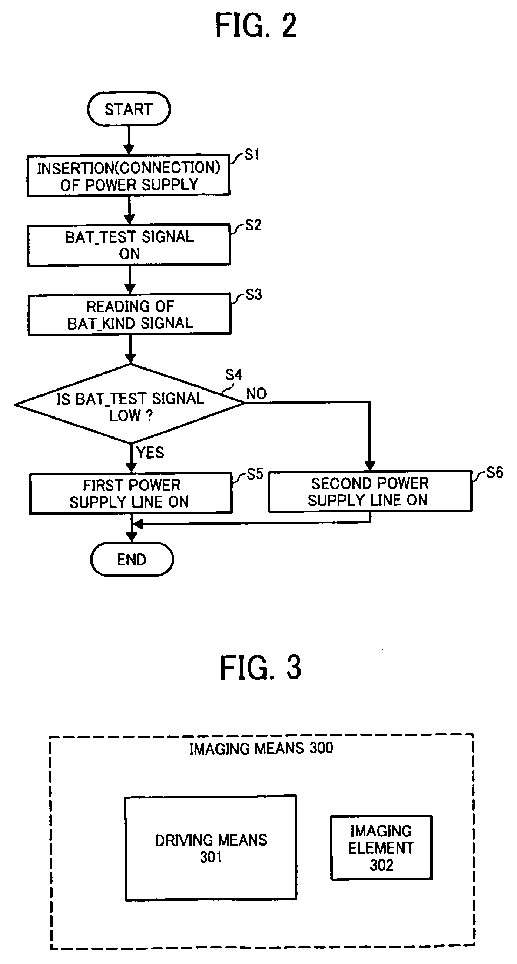

FIG. 3 illustrates an alternative embodiment of the imaging means 116. In one embodiment, the imaging means 116 has a combination of driving means 301 and an imaging element 302 to be structured as imaging means 300 as illustrated in FIG. 3.

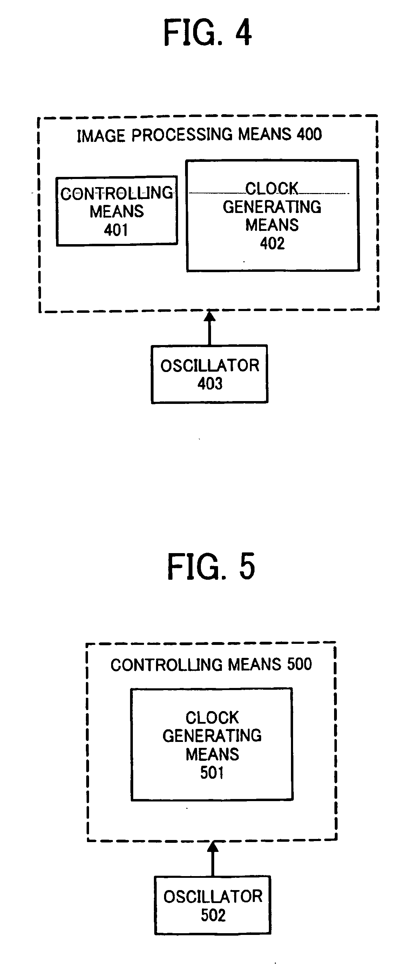

FIG. 5 illustrates an alternative embodiment of the controlling means 109. In one embodiment, the controlling means 109 includes clock generating means 501 to be structured as controlling means 500 as illustrated in FIG. 5.

Referring to FIG. 1, the first power supply line 121-1 to the N-th power supply line are selectable from one to N, wherein N is a natural number. For example, a battery is connected to the power supply line 121-1 to provide one power supply line. The plural batteries can share a single battery chamber to provide one power supply line if shapes of the batteries are the same with each other. The batteries having the same shape is an AA battery for example, which includes a primary battery and a secondary battery. The primary battery may be a manganese battery, an alkaline battery, an oxyride battery, a lithium battery, and the secondary battery may be a nickel hydride battery, although they are not limited thereto. In addition, for example, when plural batteries are to be connected to a power supply line but each of those has a shape different from each other, plural battery chambers each corresponds to corresponding one of those batteries are required to provide plural power supply lines, such as in a case where an exclusively-used square-shaped lithium battery is usable in addition to the AA battery described above.

Moreover, for example, an exclusively-used connector or the like is necessary when a power supply line is an AC adapter, which requires the plural power supply lines when the AC adapter is used in addition to the AA battery described above. However, the single power supply line is only required in a case in which a shape of the connector of the AC adapter for example is identical with the AA battery, the square-shaped lithium battery or the like,

A signal outputted from the oscillator 120 is inputted to the clock generating means 117 capable of performing frequency multiplying and frequency dividing. The clock generating means 117 outputs a signal in which a frequency is variable. The clock generating means may be a PLL (Phase-Locked Loop), a clock generator, or the like.

FIG. 4 illustrates an alternative embodiment of the image processing means 110. In one embodiment, clock generating means 402 is built into image processing means 400 or in controlling means 401.

The clock signal is supplied to respective means or devices, and the respective means or the devices operate based on the supplied clock signal. In the present embodiment, the frequency of the clock signal is configured to be variable according to the power supply lines.

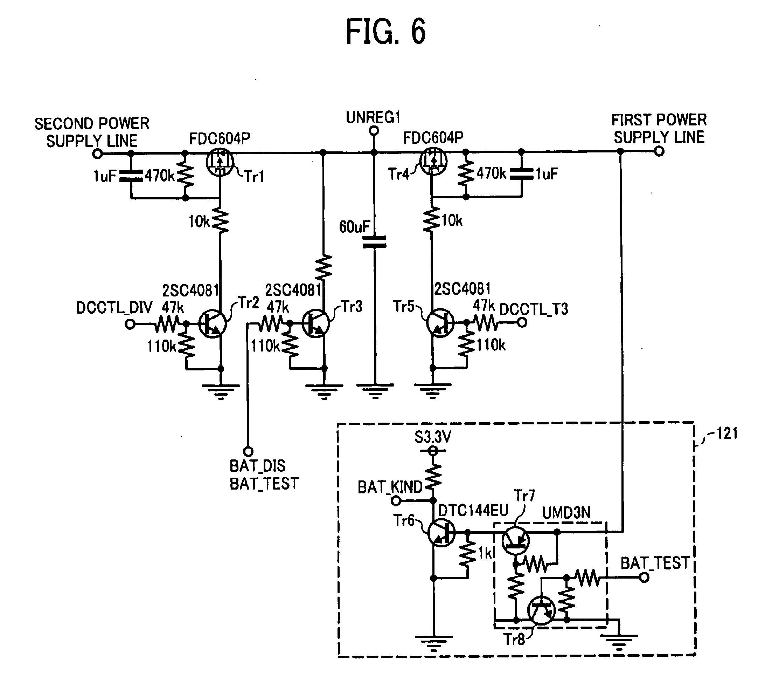

Now, operation for distinguishing the power supply lines in the image recording apparatus 100 illustrated in FIG.1 according to the present embodiment will be described with reference to FIG. 2 and 6. Note that, for the sake of convenience of explanation, description will be given based on a case where the number of the power supply lines is two, i.e. the first power supply line and the second power supply line.

FIG.2 is a flowchart illustrating a method for distinguishing the power supply lines, and FIG.6 is a circuit diagram illustrating a power supply line distinguishing circuit, used in the image recording apparatus 100.

In the circuit illustrated in FIG. 6 with reference to FIG. 2, when a power supply is connected to or inserted into one of the first power supply line and the second power supply line (Step S1), a BAT_TEST signal is supplied from the controlling means 109 illustrated in FIG. 1. Then, the controlling means 109 reads a BAT_KIND signal (Step S3). The controlling means 109 then determines whether or not the BAT_TEST signal has a logic level "Low" (Step S4). When the controlling means 109 determines that the BAT_TEST signal has the logic level "Low" (Step S4: Yes), then the controlling means 109 turns ON the first power supply line (Step S5). When the controlling means 109 determines that the BAT_TEST signal has no "Low" logic level, i.e., when the BAT_TEST signal has a "High" logic level (Step S4: No), then the controlling means 109 turns ON the second power supply line (Step S6).

More specifically, for example, when a power supply for the first power supply line, such as the alkaline battery, is inserted into or connected with the first power supply line, the BAT_TEST signal is supplied from the controlling means 109, which is applied to a base of a transistor Tr8 of the power supply line distinguishing circuit 121. When the BAT_TEST signal is applied to the base of the transistor Tr8, the transistor Tr8 is turned ON, and a base potential of a transistor Tr7 becomes a logic level "Low", whereby the transistor Tr7 is turned ON.

When the transistor Tr7 is turned ON, a potential of the first power supply line is applied to an emitter and a base of the transistor Tr6, by which a base potential of the transistor Tr6 becomes a "High" logic level and the transistor Tr6 is turned OFF. When the transistor Tr6 is turned OFF, a connection between a collector and the base of the transistor Tr6 is cut off, whereby a collector potential thereof becomes a "High" logic level. The controlling means 109 reads the BAT_KIND signal having the "High" logic level of the transistor Tr6, and applies a DCCTL_T3 signal having a "High" logic level to a base of a transistor Tr5.

When the DCCTL_T3 signal in the "High" logic level is applied to the base of the transistor Tr5. the transistor T5 is turned ON, and a gate potential of a transistor Tr4 becomes a "Low" logic level from a "High" logic level. When the gate potential of the transistor Tr4 becomes the "Low" logic level from the "High" logic level, the transistor Tr4 is turned ON, and the first power supply line and a terminal UNREGI are connected with each other. Thereby, a power supply of the image recording apparatus 100 illustrated in FIG. 1 is set to be based on the power supply connected with the first power supply line, which is, in the present embodiment, the alkaline battery. These steps correspond to the Steps S1 to S5 of FIG. 2.

Then, the frequency of the clock signal or a clock frequency of the clock generating means 117 illustrated in FIG. 1 is varied according to the power supply connected with the first power supply line, i.e., the alkaline battery in the present embodiment. Since the alkaline battery has the low power delivery performance, the clock frequency of the clock generating means 117 is varied to be low, in the case of the alkaline battery, for example.

In addition, when a power supply such as the lithium battery is inserted into or connected with the second power supply line, the BAT_TEST signal is supplied from the controlling means 109 and is applied to the base of the transistor Tr8 of the power supply line distinguishing circuit 121. When the BAT_TEST signal is applied to the base of the transistor Tr8, the transistor Tr8 is turned ON, and the base potential of the transistor Tr7 becomes the logic level "Low", and the transistor Tr7 is turned OFF.

When the transistor Tr7 is turned OFF, the potential of the base of the transistor Tr6 becomes a "Low" logic level and thus the transistor Tr6 is turned OFF. When the transistor Tr6 is turned OFF, the collector potential of the transistor Tr6 becomes a "High" logic level. The controlling means 109 reads the BAT_KIND signal having the "High" logic level of the collector of the transistor Tr6, and applies the DCCTL_T3 signal having a "Low" logic level to the base of the transistor Tr5 and at the same time, applies a DCCTL_DIV signal having a "High" logic level to a base of a transistor Tr2.

When the DCCTL_T3 signal in the "Low" logic level is applied to the base of the transistor Tr5, the transistor T5 is turned OFF, and the gate potential of the transistor Tr4 becomes the same in a potential as a source. When the gate potential of the transistor Tt4 becomes the same potential with the source, the transistor Tr4 is turned OFF, and the first power supply line and the terminal UNREG1 are disconnected with each other.

On the other hand, when the DCCTL_DIV signal of the "High" logic level is applied to the base of the transistor Tr2, the transistor Tr2 is turned ON, and a gate potential of a transistor Tr1 becomes a "Low" logic level. When the power supply is being connected with the second power supply line, a potential of a source connected to the second power supply line becomes a "High" logic level and a potential of a gate thereof is in a "Low" logic level. Therefore, a connection between a source and a drain of the transistor Tr1 becomes a conduction state, i.e., the transistor Tr1 is turned ON. When the transistor Tr1 is turned ON, the second power supply line and the terminal UNREG1 are connected with each other. Thereby, the power supply of the image recording apparatus 100 illustrated in FIG.1 is set to be based on the power supply connected with the second power supply line, which is, in the present embodiment, the lithium battery. These steps correspond to the Steps S1 to S4 and S6 of FIG.2.

Then, the frequency of the clock signal or the clock frequency of the clock generating means 117 illustrated in FIG. 1 is varied according to the power supply connected with the second power supply line, i.e., the lithium battery in the present embodiment. In the case of the lithium battery for example, since the lithium battery has the high power delivery performance, the clock frequency of the clock generating means 117 is varied to be higher than the case of the alkaline battery.

As described in the foregoing, according to the present embodiment of the invention, the power supply lines are separated, and which of the power supply lines is the power supply being connected to is distinguished, and the frequency of the clock signal is changed according to the power supply connected to the power supply line. Therefore, the present embodiment of the invention is possible to realize and provide the image recording apparatus capable of balancing the high speed operation and the long battery life, even when the kinds of the batteries are unknown.

Referring to FIG.6, a capacitor having 60 µF is a bypass capacitor, and a transistor Tr3 is a circuit for discharging a charge accumulated in the 60µF capacitor and the transistors Tr1 and Tr4 as a power MOS (Metal-Oxide-Semiconductor) transistor, for example. When a BAT_DIS_BAT_TEST signal of a "High" logic level is supplied from the controlling means 109 and applied to a base of the transistor Tr3, the transistor Tr3 is turned ON, and thereby, the terminal UNREGI is grounded to discharge the charge mentioned above, After the charge is discharged and the power supply line distinguishing circuit is operated, the discrimination on which of the power supply lines is the power supply being connected is carried out, since the discrimination thereof is difficult when the charge described above is accumulated.

The clock generating means 117 of the image recording apparatus 100 illustrated in FIG. 1 can be configured to set the frequency of the clock signal for each of the means or the devices such as the imaging means 116, the image processing means 110, and the controlling means 109. For example, for the imaging means 116 and the image processing means 110 and so forth, the frequency of the clock signal may be set according to data to be transferred for one frame of an image, and for the controlling means 109, the frequency of the clock signal may be set according to control data of the neighbouring means or the devices.

The image recording apparatus 100 may include the plural clock generating means 117. For example, the clock generating means for the imaging means 116, the clock generating means for the image processing means 110, and the clock generating means for the controlling means 109 can be provided. Alternatively, for example, the clock generating means for the imaging means 116 and the clock generating means for both the image processing means 110 and the controlling means 109 can be provided. Thus, any combination of the plural clock generating means and the respective means or the devices can be employed, and the frequency of the clock signal can be set for each of the plural clock generating means according to such a combination.

As described above, the power delivery performance of the primary battery such as the AA alkaline battery is low. Accordingly, the image recording apparatus 100 can be configured to set the frequency of the clock signal of the clock generating means 117 low on the basis of a signal from the controlling means 109, when the primary battery is used or connected with the first power supply line according to the present embodiment.

When the secondary battery such as the lithium battery, the AC adapter or the like is used or connected with the second power supply line according to the present embodiment, the image recording apparatus 100 can be configured to set the frequency of the clock signal of the clock generating means high on the basis of a signal from the controlling means 109, since the secondary battery has the high power delivery performance.

The frequency of the clock signal may be varied in accordance with an operating state or/and a load amount. Here, the operating state or/and the load amount includes, for example, a monitoring operation, a still image photographing operation, a video shooting operation, a voice recording operation, a still image reproducing operation, a video reply operation, a voice reproducing operation, displaying of a menu, displaying of date, an operation for a data communication with a personal computer or the like, an interval photographing operation, a focusing operation, a zooming operation, a strobe-light charging operation, a strobe-light emitting operation, an activating operation, and an operation stopping operation, although it is not limited thereto. The image recording apparatus 100, for example through the controlling means 109, may be configured to set the frequency of the clock signal according to one or more of the operations.

The frequency of the clock signal may be varied in accordance with an amount of information to be processed. The amount of information to be processed includes, for example, a data amount transmitted between the respective means or the devices such as from the imaging means to the image processing means, from the image processing means to the storing means, from the image processing means to the image displaying means, and so on. The data amount may include, for example, data on an image, data on luminance, data on a color, data on a distance, and so on. The amount of information to be processed may also be an amount of a control signal to be transmitted between the respective means or the devices such as from the controlling means to the image processing means, and a data amount transmitted such as from the image recording apparatus to the personal computer or the like. The image recording apparatus 100, for example through the controlling means 109, may be configured to set the frequency of the clock signal according to the amount of information.

The image recording apparatus 100 may use the function of setting the frequency of the clock signal based on the amount of information in a case where an operation having a large amount of information, such as when data having a large number of recording pixels is sent, is performed, where photographing is to be carried out continuously, and where data is processed at high speed such as when the focusing operation is performed, for example.

An error process may be performed, preferably by the controlling means 109, when the power supply lines cannot be distinguished. Alternatively, the error process may be performed after the distinguishing operation of the power supply lines is stopped. The error process, for example, includes stopping of a sequence of processes after occurrence of the error to be advanced, displaying of an error warning display on the image displaying means 112 or with an indicator such as an LED (Light-Emitting Diode), and outputting of an error warning sound with sound means such as a speaker, a buzzer or the like. Releasing of the error process may be performed by disconnecting and connecting the power supply, by pressing a reset button, or the like, for example.

The variation of the frequency of the clock signal according to the power supply lines may be set not to be performed based on setting by an user, preferably through the controlling means 109. The user may set the performing of the variation of the frequency of the clock signal according to the power supply lines to be released with a set/release button, a set/release item on a menu screen, or the like. When the performing thereof is released, the operation is carried out with a predetermined frequency of a clock signal.

The frequency of the clock signal may be varied based on the setting by the user, preferably through the controlling means 109. For example, the frequency of the clock signal is set to be changeable by the user setting such as a setting button, the menu screen, or the like, regardless of the power supply lines.

Preferably, an element of FDC604P is used for the MOS transistors, and elements such as 2SC4081, DTC144EU, UMD3N and so on are used for the bipolar transistors illustrated in FIG. 6 according to the present embodiment, although it is not limited thereto. Note that resistance values and numerical values of the capacitors are also not limited by those depicted in FIG. 6.

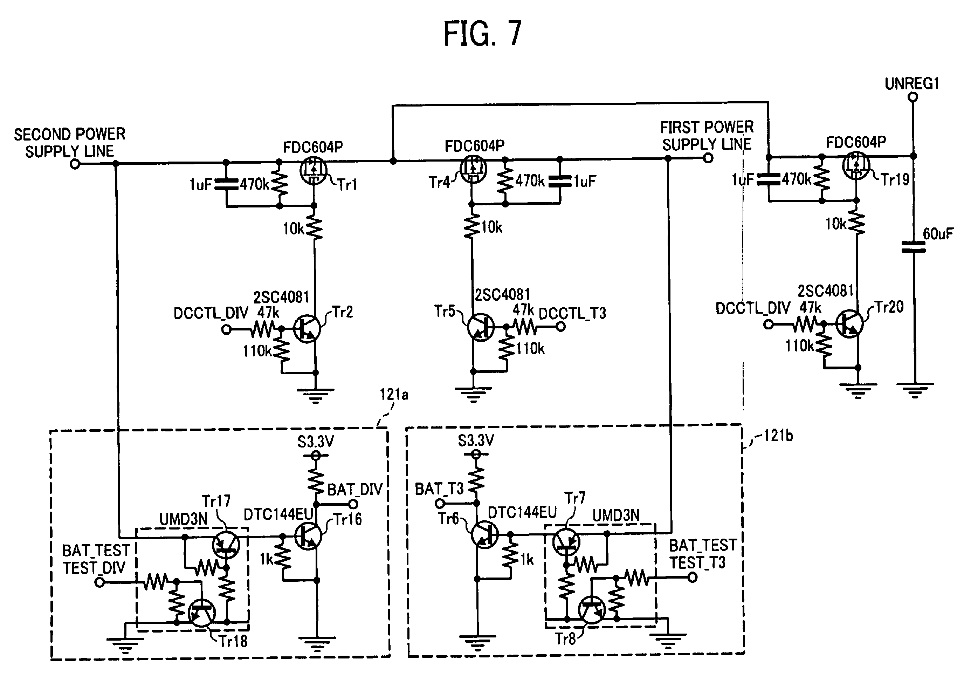

FIG. 7 illustrates an alternative embodiment of the power supply line distinguishing circuit used in the image recording apparatus illustrated in FIG. 1. The above embodiment utilizes one power supply line distinguishing circuit, although the present invention is not limited to the single power supply line distinguishing circuit. As illustrated in FIG. 7, two or more power supply line distinguishing circuits 121a and 121b may be used.

Since a structure, a function, and a flowchart on an operation of the present alternative embodiment illustrated in FIG. 7 are similar to those described with reference to FIG. 1 to 6, they will not be described in detail.

Accordingly, it is possible to achieve the following (1) to (10) from the above-described exemplary embodiments of the present invention.

(1) An image recording apparatus (100), comprising:
plural power supply lines (121-1, 121-2, 121-N) to be connected with different power supplies, respectively;
power supply line distinguishing means (121) which distinguishes to which of the power supply lines (121-1, 121-2, 121-N) is one or more of the power supplies being connected;
at least one clock generating means (117) capable of varying a frequency of a clock signal and which outputs the clock signal; and
controlling means (109) which varies the frequency of the clock signal of the at least one clock generating means (117) according to the power supply lines (121-1, 121-2, 121-N) distinguished by the power supply line distinguishing means (121).

The higher the frequency of the clock signal, the faster the operation which can be obtained, although the power consumption also becomes higher and thus, the battery life becomes shorter. On the other hand, the lower the frequency of the clock signal, the slower the operation of the means or the devices, although the power consumption becomes less and thereby the batter life becomes longer. Therefore, the high speed operation and the long battery life are in a contradictory relationship with each other, and when one of those is exploited, the other is sacrificed. The high speed operation is possible to make the image processing speed, the controlling speed or the like fast, by which the user does not have to be kept waiting. Hence, the image recording apparatus having a good responsiveness can be provided, which leads to improvement in a user interface. In addition, a frame rate can be made fast for a high-pixel image and video; so that the user is possible to view a smooth display screen having reduced flicker. In contrast, the long battery life enables a long time operation when the battery is used for the power supply, and thus apprehension for battery exhaustion is reduced. The long battery life also enables reduction of power consumption, which makes it possible to reduce environmental burdens. By varying the frequency of the clock signal according to the power supply lines in the embodiment of the invention, the most appropriate control is possible to be performed according to characteristics of the power supplies in which the operation speed and the battery life are balanced.

Hence, according to the present embodiment of the invention, the power supply lines are separated, and which of the power supply lines is the power supply being connected to is distinguished, and the frequency of the clock signal is changed according to the power supply connected to the power supply line. Therefore, the present embodiment of the invention is possible to realize and provide the image recording apparatus capable of balancing the high speed operation and the long battery life, even when the kinds of the batteries are unknown.

(2) An image recording apparatus (100) according to (1), wherein the at least one clock generating means (117) varies the frequency of the clock signal of the at least one clock generating means (117) for each means to which the clock signal is supplied, according to the power supply lines (121-1, 121-2, 121-N) distinguished by the power supply line distinguishing means (121).

Therefore, since the clock frequency is varied thoroughly for the respective means or the devices, the high speed operation and the long battery life are further enhanced.

(3) An image recording apparatus (100) according to (1) or (2), wherein the at least one clock generating means (117) includes the plural clock generating means (117).

Since the clock frequency is varied thoroughly for the respective means or the devices, the high speed operation and the long battery life are further enhanced. In addition, when the plurality of clock signals is generated with the single clock generating means, least common multiple of each of the frequencies may become the original frequency, and the original clock signal may have a high frequency. The high frequency inevitably increases the power consumption, which is not desirable. In order to avoid this matter, the plural clock generating means is provided.

(4) An image recording apparatus (100) according to any one of (1) to (3), wherein the controlling means (109) sets the frequency of the clock signal to be lower than a predetermined value, when a power delivery performance of the power supply connected to one of the power supply lines (121-1, 121-2, 121-N) is determined by the power supply line distinguishing means (121) to be lower than a predetermined performance.

When the power supply having the low power delivery performance, such as the AA alkaline battery, is used and the frequency is caused to be high to obtain the high speed operation, the battery voltage lowers due to large power consumption and, as a consequence, the battery life is significantly shortened. In order to provide the battery life not to be shortened significantly, the frequency of the clock signal is lowered to provide the battery life long.

(5) An image recording apparatus (100) according to any one of (1) to (3), wherein the controlling means (109) sets the frequency of the clock signal to be higher than a predetermined value, when a power delivery performance of the power supply connected to one of the power supply lines (121-1, 121-2, 121-N) is determined by the power supply line distinguishing means (121) to be higher than a predetermined performance.

When the power supply having the high power delivery performance, such as the lithium battery, is used, the voltage drop of the battery is small and thus there is no major impact on the battery life even when the frequency of the clock signal is caused to be high to obtain the high speed operation. Since there is a small influence on the battery life, the frequency of the clock signal is made high to obtain the high speed operation as much as possible, to provide the good responsiveness so as to improve the user interface.

(6) An image recording apparatus (100) according to any one of (1) to (3), wherein the controlling means (109) varies the frequency of the clock signal on the basis of at least one of an operating state and a load amount.

By varying the clock frequency according to need, the high speed operation and the long battery life are improved furthermore.

(7) An image recording apparatus (100) according to any one of (1) to (3), wherein the controlling means (109) varies the frequency of the clock signal on the basis of an amount of information to be processed.

By varying the clock frequency according to need, the high speed operation and the long battery life are improved furthermore.

(8) An image recording apparatus (100) according to any one of (1) to (3), wherein the controlling means (109) performs an error process when one of the power supply lines (121-1, 121-2, 121-N) to be selected cannot be distinguished by the power supply line distinguishing means (121).

When the power supply lines cannot be distinguished, it can be determined that some failure, such as failure in power supply, in image recording apparatus, etc., is generated, and further failure may occur if the sequence is advanced. The present embodiment is possible to avoid the further failure to be occurred.

(9) An image recording apparatus (100) according to any one of (1) to (3), wherein the variation of the frequency of the clock signal according to the power supply lines is released based on setting by a user through the controlling means (109).

There may be a user who wishes to have the high speed operation constantly, whereas there may be a user who wishes to have the long battery life constantly. A user's intension may not be satisfied when the frequency of the clock signal is automatically set based on optimal values of the high speed operation and the battery life. Accordingly, by providing the frequency of the clock signal, set automatically, to be releasable, the user interface improves.

(10) An image recording apparatus (100) according to any one of (1) to (3), wherein the frequency of the clock signal is variable based on setting by a user through the controlling means (109).

There may be a user who wishes to have the high speed operation constantly, whereas there may be a user who wishes to have the long battery life constantly. A user's intension may not be satisfied when the frequency of the clock signal is automatically set based on optimal values of the high speed operation and the battery life. Accordingly, by providing the frequency of the clock signal to be freely settable, the user interface improves.

Although the present invention has been described in terms of exemplary embodiments, it is not limited thereto. It should be appreciated that variations may be made in the embodiments described by persons skilled in the art without departing from the scope of the present invention as defined by the following claims. The limitations in the claims are to be interpreted broadly based on the language employed in the claims and not limited to examples described in the present specification or during the prosecution of the application, and the examples are to be construed as non-exclusive. For example, in the present disclosure, the term "preferably", "preferred" or the like is non-exclusive and means "preferably", but not limited to.

## Claims

1. An image recording apparatus (100), comprising:
plural power supply lines (121-1, 121-2, 121-N) to be connected with different power supplies, respectively;
at least one clock generating means (117) capable of varying a frequency of a clock signal and which outputs the clock signal; and
controlling means (109) which varies the frequency of the clock signal of the at least one clock generating means (117); and
power supply line distinguishing means (121) which distinguishes to which of the power supply lines (121-1, 121-2, 121-N) one or more of the power supplies are connected; **characterised by**:
a terminal (UNREG 1) that may be connected to and disconnected from each of a first power supply line (121-1) and a second power supply line (121-2) of the plural power supply lines;
wherein the controlling means varies said frequency of said clock signal according to the power supply lines (121-1, 121-2, 121-N) distinguished by the power supply line distinguishing means (121); and
wherein the first power supply line and the terminal are disconnected from each other if the power supply line distinguishing means distinguishes the second power supply line as the power supply line to which the one or more of the power supplies are connected.

2. An image recording apparatus (100) according to claim 1, wherein the at least one clock generating means (117) varies the frequency of the clock signal of the at least one clock generating means (117) for each means to which the clock signal is supplied, according to the power supply lines (121-1, 121-2, 121-N) distinguished by the power supply line distinguishing means (121).

3. An image recording apparatus (100) according to claim 1 or 2, wherein the at least one clock generating means (117) includes the plural clock generating means (117).

4. An image recording apparatus (100) according to any one of claims 1 to 3, wherein the controlling means (109) sets the frequency of the clock signal to be lower than a predetermined value, when a power delivery performance of the power supply connected to one of the power supply lines (121-1, 121-2, 121-N) is determined by the power supply line distinguishing means (121) to be lower than a predetermined performance.

5. An image recording apparatus (100) according to any one of claims 1 to 3, wherein the controlling means (109) sets the frequency of the clock signal to be higher than a predetermined value, when a power delivery performance of the power supply connected to one of the power supply lines (121-1, 121-2, 121-N) is determined by the power supply line distinguishing means (121) to be higher than a predetermined performance.

6. An image recording apparatus (100) according to any one of claims 1 to 3, wherein the controlling means (109) varies the frequency of the clock signal on the basis of at least one of an operating state and a load amount.

7. An image recording apparatus (100) according to any one of claims to 3, wherein the controlling means (109) varies the frequency of the clock signal on the basis of an amount of information to be processed.

8. An image recording apparatus (100) according to any one of claims 1 to 3, wherein the controlling means (109) performs an error process when one of the power supply lines (121-1, 121-2, 121-N) to be selected cannot be distinguished by the power supply line distinguishing means (121).

9. An image recording apparatus (100) according to any one of claims 1 to 3, wherein the variation of the frequency of the clock signal according to the power supply lines is released based on setting by a user through the controlling means (109).

10. An image recording apparatus (100) according to any one of claims 1 to 3, wherein the frequency of the clock signal is variable based on setting by a user through the controlling means (109).

## Patentansprüche

1. Bildaufzeichnungsvorrichtung (100), die umfasst:
mehrere Stromversorgungsleitungen (121-1, 121-2, 121-N), die jeweils mit verschiedenen Stromversorgungseinrichtungen zu verbinden sind;
wenigstens ein Takterzeugungsmittel (117), das eine Frequenz eines Taktsignals variieren kann und das Taktsignal ausgibt;
Steuerungsmittel (109), die die Frequenz des Taktsignals des wenigstens einen Takterzeugungsmittels (117) variieren; und
Stromversorgungsleitungs-Erkennungsmittel (121), die erkennen, mit welcher der Stromversorgungsleitungen (121-1, 121-2, 121-N) eine oder mehrere der Stromversorgungseinrichtungen verbunden sind;
**gekennzeichnet durch**:
einen Anschluss (UNREG1), der mit jeder von einer ersten Stromversorgungsleitung (121-1) und einer zweiten Stromversorgungsleitung (121-2) der mehreren Stromversorgungsleitungen verbunden und von dieser getrennt werden kann;
wobei die Steuerungsmittel die Frequenz des Taktsignals gemäß den Stromversorgungsleitungen (121-1, 121-2, 121-N), die **durch** die Stromversorgungsleitungs-Erkennungsmittel (121) erkannt werden, variieren; und
wobei die erste Stromversorgungsleitung und der Anschluss voneinander getrennt sind, wenn die Stromversorgungsleitungs-Erkennungsmittel die zweite Stromversorgungsleitung als diejenige Stromversorgungsleitung erkennen, mit der die eine oder die mehreren Stromversorgungseinrichtungen verbunden sind.

2. Bildaufzeichnungsvorrichtung (100) nach Anspruch 1, wobei das wenigstens eine Takterzeugungsmittel (117) die Frequenz des Taktsignals des wenigstens einen Takterzeugungsmittels (117) für alle Mittel, an die das Taktsignal geliefert wird, gemäß den Stromversorgungsleitungen (121-1, 121-2, 121-N), die durch die Stromversorgungsleitungs-Erkennungsmittel (121) erkannt werden, variiert.

3. Bildaufzeichnungsvorrichtung (100) nach Anspruch 1 oder 2, wobei das wenigstens eine Takterzeugungsmittel (117) die mehreren Takterzeugungsmittel (117) umfasst.

4. Bildaufzeichnungsvorrichtung (100) nach einem der Ansprüche 1 bis 3, wobei die Steuerungsmittel (109) die Frequenz des Taktsignals so einstellen, dass sie kleiner als ein im Voraus festgelegter Wert ist, wenn durch die Stromversorgungsleitungs-Erkennungsmittel (121) festgestellt wird, dass eine Leistungsabgabekapazität der mit einer der Stromversorgungsleitungen (121-1, 121-2, 121-N) verbundenen Stromversorgungseinrichtung niedriger als eine im Voraus festgelegte Kapazität ist.

5. Bildaufzeichnungsvorrichtung (100) nach einem der Ansprüche 1 bis 3, wobeidie Steuerungsmittel (109) die Frequenz des Taktsignals so einstellen, dass sie größer als ein im Voraus festgelegter Wert ist, wenn durch die Stromversorgungsleitungs-Erkennungsmittel (121) festgestellt wird, dass eine Leistungsabgabekapazität der mit einer der Stromversorgungsleitungen (121-1, 121-2, 121-N) verbundenen Stromversorgungseinrichtung höher als eine im Voraus festgelegte Kapazität ist.

6. Bildaufzeichnungsvorrichtung (100) nach einem der Ansprüche 1 bis 3, wobei die Steuerungsmittel (109) die Frequenz des Taktsignals auf der Grundlage eines Betriebszustands und/oder einer Lastgröße variieren.

7. Bildaufzeichnungsvorrichtung (100) nach einem der Ansprüche 1 bis 3, wobei die Steuerungsmittel (109) die Frequenz des Taktsignals auf der Grundlage eines Umfangs von Informationen, die zu verarbeiten sind, variieren.

8. Bildaufzeichnungsvorrichtung (100) nach einem der Ansprüche 1 bis 3, wobei die Steuerungsmittel (109) einen Fehlerprozess ausführen, wenn eine der Stromversorgungsleitungen (121-1, 121-2, 121-N), die auszuwählen ist, von den Stromversorgungsleitungs-Erkennungsmitteln (121) nicht erkannt werden kann.

9. Bildaufzeichnungsvorrichtung (100) nach einem der Ansprüche 1 bis 3, wobei die Variation der Frequenz des Taktsignals gemäß den Stromversorgungsleitungen anhand einer Einstellung durch einen Benutzer durch die Steuerungsmittel (109) freigegeben wird.

10. Bildaufzeichnungsvorrichtung (100) nach einem der Ansprüche 1 bis 3, wobei die Frequenz des Taktsignals anhand einer Einstellung durch einen Benutzer durch die Steuerungsmittel (109) variiert werden kann.

## Revendications

1. Appareil d'enregistrement d'image (100), comprenant :
plusieurs lignes d'alimentation (121-1, 121-2, 121-N) à connecter à différentes alimentations, respectivement ;
au moins un moyen de génération d'horloge (117) capable de modifier une fréquence d'un signal d'horloge et qui délivre le signal d'horloge ; et
un moyen de commande (109) qui modifie la fréquence du signal d'horloge d'au moins un moyen de génération d'horloge (117) ; et
un moyen de distinction de ligne d'alimentation (121) qui distingue à laquelle des lignes d'alimentation (121-1, 121-2, 121-N) une ou plusieurs des alimentations sont connectées ;
**caractérisé par** :
une borne (UNREG1) qui peut être connectée à chacune d'une première ligne d'alimentation (121-1) et d'une deuxième ligne d'alimentation (121-2) de la pluralité de lignes d'alimentation et déconnectés de celles-ci ;
dans lequel le moyen de commande modifie ladite fréquence dudit signal d'horloge en fonction des lignes d'alimentation (121-1, 121-2, 121-N) distinguées par le moyen de distinction de ligne d'alimentation (121) ; et
dans lequel la première ligne d'alimentation et la borne sont déconnectées l'une de l'autre si le moyen de distinction de ligne d'alimentation distingue la deuxième ligne d'alimentation en tant que ligne d'alimentation à laquelle lesdites une ou plusieurs alimentations sont connectées.

2. Appareil d'enregistrement d'image (100) selon la revendication 1, dans lequel ledit au moins un moyen de génération d'horloge (117) modifie la fréquence du signal d'horloge dudit au moins un moyen de génération d'horloge (117) pour chaque moyen auquel le signal d'horloge est délivré, en fonction des lignes d'alimentation (121-1, 121-2, 121-N) distinguées par le moyen de distinction de ligne d'alimentation (121).

3. Appareil d'enregistrement d'image (100) selon la revendication 1 ou 2, dans lequel ledit au moins un moyen de génération d'horloge (117) comprend la pluralité de moyens de génération d'horloge (117).

4. Appareil d'enregistrement d'image (100) selon l'une quelconque des revendications 1 à 3, dans lequel le moyen de commande (109) fixe la fréquence du signal d'horloge à une valeur inférieure à une valeur prédéterminée, lorsqu'il est déterminé par le moyen de distinction de ligne d'alimentation (121) qu'une performance de distribution de puissance de l'alimentation connectée à l'une des lignes d'alimentation (121-1, 121-2, 121-N) est inférieure à une performance prédéterminée.

5. Appareil d'enregistrement d'image (100) selon l'une quelconque des revendications 1 à 3, dans lequel le moyen de commande (109) fixe la fréquence du signal d'horloge pour qu'elle soit supérieure à une valeur prédéterminée, lorsqu'il est déterminé par le moyen de distinction de ligne d'alimentation (121) qu'une performance de distribution de puissance de l'alimentation connectée à l'une des lignes d'alimentation (121-1, 121-2, 121-N) est supérieure à une performance prédéterminée.

6. Appareil d'enregistrement d'image (100) selon l'une quelconque des revendications 1 à 3, dans lequel le moyen de commande (109) modifie la fréquence du signal d'horloge sur la base d'au moins l'un d'un état de fonctionnement et d'une quantité de charge.

7. Appareil d'enregistrement d'image (100) selon l'une quelconque des revendications 1 à 3, dans lequel le moyen de commande (109) modifie la fréquence du signal d'horloge sur la base d'une quantité d'informations à traiter.

8. Appareil d'enregistrement d'image (100) selon l'une quelconque des revendications 1 à 3, dans lequel le moyen de commande (109) effectue un traitement d'erreur lorsque l'une des lignes d'alimentation (121-1, 121-2, 121-N) à sélectionner ne peut pas être distinguée par le moyen de distinction de ligne d'alimentation (121).

9. Appareil d'enregistrement d'image (100) selon l'une quelconque des revendications 1 à 3, dans lequel la modification de la fréquence du signal d'horloge en fonction des lignes d'alimentation est annulée sur la base du paramétrage effectué par un utilisateur par l'intermédiaire du moyen de commande (109).

10. Appareil d'enregistrement d'image (100) selon l'une quelconque des revendications 1 à 3, dans lequel la fréquence du signal d'horloge peut être modifiée sur la base du paramétrage effectué par un utilisateur par l'intermédiaire du moyen de commande (109).
